# EUROPÄISCHE PATENTSCHRIFT

(11) **EP 4 413 211 B1**
(45) Veröffentlichungstag und Bekanntmachung des Hinweises auf die Patenterteilung: **04.11.2026**
(21) Anmeldenummer: 22782520.5
(22) Anmeldetag: 22.09.2022
(51) Int. Cl.: E04B 1/26, F16B 2/14, F16B 15/00

(54) **VERBINDUNGSMITTEL ZUM VERBINDEN VON HOLZBAUTEILEN**
CONNECTION MEANS FOR CONNECTING WOOD PARTS
MOYEN DE RACCORDEMENT SERVANT À RELIER DES PIÈCES EN BOIS

(30) Priorität: 04.10.2021 IT 202100025349
(43) Veröffentlichungstag der Anmeldung: 14.08.2024
(73) Patentinhaber: Rotho Blaas Srl, 39040 Cortaccia sulla strada del vino (BZ) (IT)
(72) Erfinder: MADEREBNER, Roland, 6020 Innsbruck (AT)
(74) Vertreter: Ausserer, Anton
(86) Internationale Anmeldenummer: PCT/EP2022/076348
(87) Internationale Veröffentlichungsnummer: WO 2023/057222

(56) Entgegenhaltungen:
- EP-A1- 3 366 855
- WO-A1-2020/212212
- JP-A- 2006 144 489

## Beschreibung

Die vorliegende Erfindung betrifft ein Verbindungsmittel zum Verbinden eines eine Ausnehmung aufweisenden Holzbauelements mit einem weiteren Bauelement umfassend zumindest ein erstes und zumindest ein zweites Flächenelement und zumindest ein Spannelement. Außerdem betrifft die Erfindung ein System aus einem erfindungsgemäßen Verbindungsmittel und zwei Holzbauelementen bzw. einem Holzbauelement und einem Bauelement, sowie ein Verfahren zum Verbinden eines Holzbauelements mit einem erfindungsgemäßen Verbindungsmittel.

### HINTERGRUND DER ERFINDUNG UND STAND DER TECHNIK

Im Holzbau sind verschiedene Verbindungssysteme zum Verbinden von Holzbauelementen bekannt. Die Verbindungsmittel sind zumeist stiftförmig, woraus sich eine stark verminderte Tragfähigkeit und Steifigkeit ergibt.

Biegesteife Plattenstöße können beispielsweise mit Hilfe von Reaktionsharz oder eingeklebten Stahlblechen ausgeführt werden. Das Reaktionsharz wird dabei in zuvor eingebrachte Ausnehmungen in den Holzbauelementen im Bereich des Plattenstoßes eingefüllt und danach ausgehärtet. Die Stahlbleche können in zuvor eingebrachte Schlitze an den Holzbauelementen eingelegt werden, welche danach mit Kleber aufgefüllt werden. Das Aushärten des Reaktionsharzes dauert relativ lang und die Verwendung von Reaktionsharz als Verbindungsmittel ist daher auf Baustellen, wo zumeist unter großem Zeitdruck gearbeitet wird, nicht geeignet. Auch die eingeklebten Stahlbleche können auf Baustellen, auf welchen sehr viel Staub anfällt, nicht verwendet werden, da Staub in die Schlitze an den Holzbauelementen gelangt und der Kleber somit Seine Haftung verliert. Außerdem verlangt die Verwendung von reaktiven Harzen kontrollierte Konditionen von Temperatur und Feuchtigkeit, deshalb sind diese besonders nicht geeignet zum Einsatz auf der Baustelle.

EP 3 366 855 A1 offenbart ein gattungsgemäßes Verbindungsmittel und ein entsprechendes Verfahren.

### KURZE BESCHREIBUNG DER ERFINDUNG

Aufgabe der vorliegenden Erfindung ist daher, ein Verbindungsmittel zur Verbindung von Holzbauelementen bereitzustellen, welches die Biegesteifigkeit erhält, sehr schnell und auch in einer Baustellenumgebung einfach und ohne Verluste der Steifigkeit und Tragfähigkeit angebracht werden kann.

Gelöst wird diese Aufgabe durch ein Verbindungsmittel mit den Merkmalen des Anspruchs 1 zum Verbinden eines eine Ausnehmung aufweisenden Holzbauelements mit einem weiteren Bauelement, umfassend
- zumindest ein erstes und zumindest ein zweites Flächenelement und,
- zumindest ein Spannelement,
wobei das zumindest eine erste und zweite Flächenelement sich gegenüberliegen und eine Distanz beim Einlegen des Verbindungsmittel samt Flächenelementen und Spannelemente in die Ausnehmung der Holzbauelemente aufweisen, wobei die Distanz beim Spannen des Spannelements veränderlich ist, wobei das zumindest eine erste und zweite Flächenelement jeweils eine erste und zweite Oberfläche aufweisen, wobei die zweiten Oberflächen des ersten und zweiten Flächenelements zueinander weisen, wobei die ersten Oberflächen des ersten und zweiten Flächenelements Vorsprünge aufweisen, wobei das zumindest eine Spannelement formschlüssig zwischen dem zumindest einen ersten und zweiten Flächenelement verklemmbar ist.

Die Vorsprünge weisen vorteilhafterweise eine spitze auf, d.h**.** die Vorsprünge können spitzig sein was das Eindringen der Vorsprünge in das Holzbauelement erleichtert.

Die Distanz zwischen den Platten kann zwischen 4mm bis 80mm betragen, wobei als Distanz als der Mittelwert der Distanz zwischen den Platten betrachtet werden kann und/oder die interne netto Distanz zwischen den Platten in Expansionsrichtung (Pressrichtung).

Die Flächenelemente des erfindungsgemäßen Verbindungsmittels können somit sehr einfach an Ausnehmungen in Holzbauelementen angebracht werden. Mithilfe der Flächenelemente samt Spannelement kann ein Holzbauelement mit einem Bauelement derart verbunden werden, dass sowohl Quer- als auch Längskräfte übertragen werden. Das Verbindungsmittel kommt somit ohne jeglichen Klebstoff und Reaktionsharze aus und weist dennoch eine sehr hohe Biegesteifigkeit bei hoher Duktilität auf.

Ein wesentliches Merkmal des erfindungsgemäßen Verbindungsmittels sind die Vorsprünge an der ersten Oberfläche des ersten und zweiten Flächenelements. Indem die ersten Oberflächen der Flächenelemente an den Holzbauelementen anliegen, können die Vorsprünge in das Holz eingepresst werden. Die erste Oberfläche des ersten und zweiten Flächenelements kann beispielsweise eine gezackte, gezahnte oder gerillte Oberfläche aufweisen. Somit weist eine an einem Holzbauelement anliegende erste Oberfläche eine hohe Reibung auf.

Außerdem werden mithilfe des Spannelements die Vorsprünge der ersten Oberflächen in das Holz gepresst, Wenn die Vorsprünge spitz sind erleichtern Sie diese einpressen. Dadurch werden einwirkende Kräfte entlang des gesamten Flächenelements verteilt. Das Spannelement bewirkt auch eine veränderte Distanz zwischen dem ersten und zweiten Flächenelement, da durch ein Verspannen des Spannelements die Vorsprünge immer tiefer in das Holzbauelement gepresst werden und die Flächenelement sich somit auseinander bewegen. Das Spannelement spreizt somit die Flächenelement und lässt sie ins Holz eindringen.

In einer Ausführungsvariante sind die Vorsprünge über die gesamten ersten Oberflächen der Flächenelemente verteilt, wobei die Form der Vorsprünge ausgewählt ist aus der Gruppe Zacken, Zinken, Zähne, Rillen, Kerven, Nuten, Haken oder Granulate. Die Granulate können auch auf Oberflächen aufgeklebt werden. Anhand dieser Vorsprünge kann eine Verbindung zum Holzbauelement hergestellt werden, indem die Vorsprünge mechanisch im Holz einrasten. Eine solche Verbindung weist eine Leistung auf, welche mit der Steifigkeit einer Verklebung vergleichbar ist. Außerdem können die Flächenelemente mit den Vorsprüngen demontiert werden und bilden ein nicht-invasives System.

Bei den Flächenelementen kann es sich auch um Nagelplatten, Krallenplatten oder dergleichen handeln.

Die Vorsprünge wandern beim Einbringen des Spannelements immer tiefer in das Holz der Holzbauelemente, wo sie schlussendlich einrasten. Normalerweise werden Flächenelemente mit Vorsprüngen wie z.B**.** Nagelplatten an Holzaußenseiten mittels externen hydraulischen Pressen angebracht, um den nötigen Druck zum Einarbeiten der Vorsprünge in das Holz bereitzustellen. Die hydraulischen Pressen werden erfindungsgemäß durch das Spannelement ersetzt, welches die Vorsprünge der Flächenelemente in die Holzbauelemente presst. Dabei werden nach dem Einrasten der Vorsprünge im Holz einwirkende Kräfte von den Vorsprüngen aufgenommen und über die gesamte Fläche der Flächenelemente verteilt. Durch das Einpressen entsteht ein Form- und Reibschluss.

Die Dichte der Vorsprünge an der ersten Oberfläche der Flächenelemente kann variieren. Eine hohe Dichte ermöglicht eine hohe Widerstandsfähigkeit und Steifigkeit des Verbindungsmittels, benötigt jedoch einen größeren Druck bis die Vorsprünge im Holz eingepresst sind.

Weiters kann es sich bei den Flächenelementen um Platten handeln. Die Platten können eine Stärke von 3 bis 40 mm aufweisen. Damit kann eine Kopplung der Holzbauelemente mit hoher Tragfähigkeit und Steifigkeit garantiert werden.

Außerdem können die Flächenelemente aus Stahl, Edelstahl, Aluminium oder Kunststoff bestehen.

In einer weiteren Ausführungsvariante können das erste und zweite Flächenelement konvex gekrümmt sein und mit dem dazwischen angeordneten Spannelement ein stiftförmiges Verbindungsmittel bilden. Ein solches Verbindungsmittel kann beispielsweise eine eingegossene Gewindestange oder dergleichen ersetzten. Das Verbindungsmittel muss nicht eingegossen werden und kann daher leichter angepasst bzw. auch ausgetauscht werden. Aufgrund der Vorsprünge an den Flächenelementen und dem Spannelement bietet das stiftförmige Verbindungsmittel dennoch eine gleich große Leistung wie ein eingegossenes Verbindungsmittel.

Es handelt sich bei dem zumindest einen Spannelement um einen Klemmkeil.

Der zumindest eine Klemmkeil umfasst ein stiftförmiges Verbindungsmittel, vorzugsweise einen Passbolzen, eine Gewindestange oder eine Spindel, und zumindest einen Keil, wobei der zumindest eine Keil eine Bohrung z.b. eine runde oder längliche Bohrung umfasst, mit welcher das stiftförmige Verbindungsmittel in Eingriff steht.

Der Klemmkeil kann somit zwischen den Flächenelementen eingebracht werden, wobei der Keil entlang des stiftförmigen Verbindungsmittels verschoben werden kann. Indem der Keil an den zweiten Oberflächen des ersten und zweiten Flächenelements anliegt, lässt sich mithilfe des Klemmkeils die Distanz zwischen den Flächenelementen verändern.

Außerdem umfasst der zumindest eine Klemmkeil einen ersten und zweiten Keil, wobei die Keile dieselbe sich verjüngende Grundform aufweisen und derart mit dem stiftförmigen Verbindungmittel in Eingriff stehen, dass die verjüngten Enden der Keile zueinander oder voneinander wegweisen, wobei die Keile mit zumindest einer Keilfläche an der zweiten Oberfläche des ersten oder zweiten Flächenelements anliegen. Diese symmetrische gegenläufige Keilwirkung des so ausgeführten Klemmkeils ermöglicht auch eine symmetrische Kräfteverteilung und daher ein möglichst effizientes Spannelement. Der Klemmkeil kann zwischen den Flächenelementen angeordnet und die Keile eingepresst werden.

Die Keile können beispielsweise mithilfe einer Gewinde-Spindel zwischen den Flächenelementen eingepresst werden. Dafür steht die Gewinde-Spindel mit der Bohrung der Keile, bei welcher es sich in dieser Ausführungsvariante um eine Gewindebohrung handelt, in Eingriff. Die Gewinde-Spindel weist zwei gegenläufige Gewindeabschnitte auf, an welchen jeweils ein Keil aufgeschraubt wird. Die beiden entgegengesetzt gerichteten Keile sind somit in entgegengesetzten Richtungen entlang der Gewinde-Spindel verstellbar. Durch Drehen der Gewinde-Spindel lässt sich daher sehr einfach die Distanz zwischen den Flächenelementen variieren und die Keile können zwischen den Flächenelementen verkeilt werden.

Gleichzeitig werden dadurch auch die Vorsprünge an den ersten Oberflächen der Flächenelemente in das Holzbauelement eingepresst.

In einer weiteren Ausführungsvariante werden die Keile mithilfe eines Passbolzens zwischen den Flächenelementen eingebracht und verkeilt. Hierfür wird der Passbolzen in die Bohrungen der Keile eingepresst oder eingeklebt.

Außerdem kann es sich bei dem stiftförmigen Verbindungsmittel auch um eine einfache Gewindestange handeln, wobei der erste Keil entlang der Gewindestange verschiebbar und der zweite Keil auf die Gewindestange aufschraubbar ist. Der so ausgeführte Klemmkeil kann daher zwischen erstem und zweitem Flächenelement eingebracht werden, indem zuerst der zweite Keil auf die Gewindestange aufgeschraubt wird, welche danach mit dem noch freien Ende voraus soweit zwischen die Flächenelemente geschoben wird, bis sich der zweite Keil verkeilt. Danach kann der erste Keil auf die Gewindestange aufgebracht werden und bis zum Erreichen einer formschlüssigen Verbindung zwischen die Flächenelemente geschoben werden.

In dieser Ausführungsvariante umfasst der Klemmkeil bevorzugt eine Mutter, wobei die Mutter über dem entlang der Gewindestange verschiebbaren, ersten Keil an der Gewindestange aufgeschraubt wird. Durch Festziehen der Mutter an der Gewindestange werden die Keile zwischen den Flächenelementen aufeinander zu bewegt. Die in einer Ausnehmung eines Holzbauelements angeordneten Flächenelemente können durch Festziehen der Mutter daher immer stärker gegen die Holzbauelemente gedrückt werden. Das heißt das Festziehen der Mutter bewirkt auch das Einpressen der Vorsprünge an der ersten Oberfläche. Außerdem kann zwischen Mutter und erstem Keil eine Spannfeder oder eine Spannscheibe auf die Gewindestange geschoben werden. Weiters können noch Unterlegscheiben zwischen Mutter und erstem Keil bzw. zwischen Mutter, Keil und Spannscheibe angebracht werden. Außerdem können auch Kontermuttern oder Sicherungsmuttern verwendet werden. Diese erlauben eine besonders sichere Verbindung und verhindern ein Loslösen der Muttern.

Des Weiteren kann es sich bei dem zumindest einem Spannelement um eine Spannstange handeln. Die Spannstange kann beispielsweise zwei stiftförmige Verbindungsmittel mit Gewinde wie z.B**.** Gewindestangen und eine Mutter umfassen. Die beiden Gewindestangen stehen mit der Mutter in Eingriff, mit welcher die Länge der Spannstange verändert werden kann. Indem zumindest eine Spannstange quer zwischen den Flächenelementen eingebracht wird, können die Flächenelemente durch Spannen der Spannstange in das Holzbauelement eingepresst werden. Weiters kann die Spannstange auch nur ein stiftförmiges Verbindungsmittel wie eine Gewindestange umfassen, auf welches eine Mutter samt Spannfeder und Hülse aufgebracht werden kann. Die Hülse liegt dabei an der zweiten Oberfläche des ersten Flächenelements und das stiftförmige Verbindungsmittel an der zweiten Oberfläche des zweiten Flächenelements (oder umgekehrt) an. Durch Verdrehen der Mutter lässt sich die Spannstange wiederum zwischen den Flächenelementen verspannen und ermöglicht das Einpressen und Einrasten der Vorsprünge in das Holzbauelement, vorteilhafterweise der Spitzen Vorsprünge.

In einer weiteren Ausführungsvariante umfassen die zweiten Oberflächen des ersten und zweiten Flächenelements gegenüberliegend jeweils zumindest eine Spannelement-Ausnehmung, wobei das zumindest eine Spannelement in der zumindest einen Spannelement-Ausnehmung zwischen erstem und zweitem Flächenelement verklemmbar ist.

Die Spannelement-Ausnehmung kann in Form von Schrägflächen an den zweiten Oberflächen der Flächenelemente ausgeführt sein, an welchen die Spannelemente anliegen können. Sofern die Spannelemente Keile umfassen, können die schrägen Seitenflächen der Keile an diesen Schrägflächen anliegen und beim Spannen des Klemmkeils entlang den Schrägflächen verlaufen. Im Falle von zwei Keilen umfassen die Flächenelemente zumindest zwei entgegengesetzt geneigte Spannelement-Ausnehmungen in Form von Schrägflächen, an welchen die entgegengesetzt gerichteten Keile anliegen können.

Außerdem kann die Spannelement-Ausnehmung eine kreisförmige Vertiefung umfassen, in welchen die Spannstäbe liegen können. Dadurch wird ein seitliches Verrutschen der Spannstäbe verhindert.

Zusammengefasst gehen die Spannelemente somit einerseits eine formschlüssige Verbindung mit den Flächenelementen ein. Andererseits wird durch das Spannelement ein Herauswandern der Vorsprünge an den ersten Oberflächen, bei welchen es sich beispielsweise um Zacken, Zinken, Zähne, Rillen, Kerven, Nuten oder dergleichen handeln kann, aus den Holzbauelementen verhindert, da die Flächenelemente durch das Spannelement ständig gegen die Holzbauelemente gedrückt/vorgespannt werden.

In einer weiteren Ausführungsvariante umfasst das Verbindungsmittel eine Kopfplatte, wobei die Kopfplatte mit dem ersten und zweiten Flächenelement verbindbar ist. Die Kopfplatte umfasst besonders bevorzugt zumindest ein Langloch, an welchem eines der Flächenelemente mit der Kopfplatte verschraubt werden kann. Dadurch wird eine Bewegung des Flächenelements relativ zur Kopfplatte erlaubt. Da sich die Distanz der Flächenelemente beim Spannen des Spannelements ändert, muss zumindest ein Flächenelement relativ zur Kopfplatte bewegbar sein. Dadurch können die Flächenelemente mitsamt der Kopfplatte an einem Holzbauteil verspannt werden und die Kopfplatte kann danach an einem weiteren Bauteil befestigt werden.

Die erfindungsgemäße gestellte Aufgabe wird auch durch ein System mit den Merkmalen des Anspruchs 10 umfassend ein erfindungsgemäßes Verbindungsmittel und zwei Holzbauelemente gelöst. Die Holzbauelemente weisen aneinander angrenzende Ausnehmungen auf, wobei das erste und zweite Flächenelement gegenüberliegend in den aneinander angrenzenden Ausnehmungen der Holzbauelemente fixiert sind, wobei die ersten Oberflächen der Flächenelemente an den Holzbauelementen anliegen, wobei die Vorsprünge 4 an der ersten Oberfläche in das Holzbauelement eingepresst sind, wobei das zumindest eine Spannelement 3 formschlüssig zwischen den Flächenelementen verklemmt ist, wobei mit dem Verbindungsmittel die Holzbauelemente form- und kraftschlüssig verbunden sind.

Außerdem kann die Erfindung auch ein System umfassend ein erfindungsgemäßes Verbindungsmittel mit Kopfplatte, ein eine Ausnehmung aufweisendes Holzbauelement und ein Bauelement betreffen. Bei diesem System sind das erste und zweite Flächenelement gegenüberliegend in der Ausnehmung des Holzbauelements fixiert, wobei die ersten Oberflächen der Flächenelemente an dem Holzbauelement anliegen, wobei die Vorsprünge an der ersten Oberfläche in das Holzbauelement eingepresst sind, wobei die Kopfplatte am Bauelement fixiert ist, wobei mit dem Verbindungsmittel das Holzbauelement mit dem Bauelement form- und kraftschlüssig verbunden sind.

Des Weiteren wird die erfindungsgemäß gestellte Aufgabe durch ein Verfahren mit den Merkmalen des Anspruchs 12 zum Verbinden von mindestens zwei Holzbauelementen mit einem erfindungsgemäßen Verbindungsmittel gelöst, wobei die Holzbauelemente nebeneinander angeordnet sind und zumindest eine durchgehende Ausnehmung aufweisen. Das Verfahren umfasst die Schritte
- Einlegen der Verbindungsmittel samt Flächenelemente und Spannelemente in die zumindest eine Ausnehmung der Holzbauelemente, wobei die erste Oberfläche des ersten und zweiten Flächenelements jeweils in Richtung der Holzbauelemente weist,
- Spannen des Spannelements soweit, bis die Flächenelemente mit den Holzbauelementen form- und kraftschlüssig verbunden sind.

Das erfindungsgemäße Verbindungsmittel wird bevorzugt als Paket, das heißt mit Flächenelementen und dem zumindest einem Spannelement, in die Ausnehmung der Holzbauelemente eingebracht. Hierfür können die Flächenelemente in der Montagestellung mit dem dazwischen angeordneten Spannelement mit einem Band oder einem Draht gesichert sein. Während dem Einpressen des Verbindungselements, das heißt während dem Spannen des Spannelements, kann das Band oder der Draht reißen. Dies ermöglicht einen sehr einfachen Transport des aus mindestens drei Teilen bestehenden Verbindungsmittels.

Außerdem umfasst die Erfindung auch ein Verfahren zum Verbinden eines eine Ausnehmung aufweisenden Holzbauelements mit einem weiteren Bauelement mit einem Verbindungsmittel, welches eine an den angebrachte Kopfplatte aufweist. Das Verfahren entspricht im Wesentlichen dem Verfahren zum Verbinden von zumindest zwei Holzbauelementen, wobei in einem letzten Schritt die Kopfplatte am Bauteil fixiert wird.

Die Vorsprünge an den ersten Oberflächen der Flächenelemente können während des Spannens des Spannelements immer tiefer in die Holzbauelemente eingepresst werden und schlussendlich einrasten. Besonders bevorzugt wird das Spannelement nach dem Einrasten der Vorsprünge derart vorgespannt, dass die Flächenelemente permanent überdrückt sind. Dadurch wird ein Herauswandern der Vorsprünge auch bei nachträglichen Änderungen der Geometrien, welche beispielsweise durch Quellen oder Schwinden der Holzbauteile auftreten, verhindert. Die Vorspannung der Spannelemente kann mithilfe eines Drehmomentschlüssels durchgeführt werden.

Bei Verwendung eines Klemmkeils als Spannelement mit einem ersten und zweiten Keil, einem Gewindestab und einer Mutter, wird beim erfindungsgemäßen Verfahren zunächst der Klemmkeil mit an einem Ende der Gewindestange aufgeschraubtem, zweitem Keil zwischen die Flächenelemente geschoben. Danach kann der erste Keil bzw. die Mutter auf das andere, freie Ende der Gewindestange aufgesteckt bzw. aufgeschraubt werden und die Mutter soweit festgezogen werden, bis die Flächenelemente mit den Holzbauelementen und form- und kraftschlüssig verbunden sind.

### DETAILLIERTE BESCHREIBUNG DER ERFINDUNG

Um die Erfindung besser zu veranschaulichen, werden die wesentlichen Merkmale anhand von bevorzugten Ausführungsformen des erfindungsgemäßen Verbindungsmittels zum Verbinden von Holzbauelementen in folgenden Figuren dargestellt.

Es zeigen:
- Fig. 1a und 1b: die Verwendung des erfindungsgemäßen Verbindungsmittels zur Verbindung eines Holzbauelements an einem Stahlträger (Fig. 1a links), zur Verbindung zweiter Holzbauelemente (Fig. 1a rechts) und zur Verbindung eines Holzbauelements an mineralischen Bauteilen mit Bewehrung (Fig. 1b).
- Fig. 2a und 2b: die Verwendung des erfindungsgemäßen Verbindungsmittels zur Verbindung eines Holzbauelements an einem Breitflanschträger (Fig. 1a links), zur Verbindung zweiter Holzbauelemente (Fig. 1a rechts) und zur Verbindung eines Holzbauelements an mineralischen Bauteilen mit Bewehrung (Fig. 1b) mit einer bauphysikalisch wirksamen Zwischenschicht die zum Beispiel als Wärmedämmung oder luftdichte Ebene dient, zwischen den verbundenen Bauteilen.
- Fig. 3a: das erfindungsgemäße Verbindungsmittel mit zwei ebenen Flächenelementen und einem Klemmkeil mit zwei durchgehenden Keilen.
- Fig. 3b: das erfindungsgemäße Verbindungsmittel mit zwei ebenen Flächenelementen und mehreren Klemmkeilen mit jeweils zwei Keilen.
- Fig. 4: das erfindungsgemäße Verbindungsmittel mit zwei Flächenelementen und mehreren Klemmkeilen mit jeweils zwei trapezförmigen Keilen und beispielhaften formschlüssigen Spannelement-Ausnehmungen in Form von Schrägflächen an den Flächenelementen.
- Fig. 5a: das erfindungsgemäße Verbindungsmittel mit zwei Flächenelementen und mehreren Klemmkeilen mit jeweils zwei trapezförmigen, zueinander weisenden Keilen und Spannelement-Ausnehmungen in Form von durchgehenden Schrägflächen an den Flächenelement.
- Fig. 5b: das erfindungsgemäße Verbindungsmittel mit zwei Flächenelementen und mehreren Klemmkeilen mit jeweils zwei trapezförmigen, voneinander weg weisenden Keilen und Spannelement-Ausnehmungen in Form von durchgehenden Schrägflächen an den Flächenelement.
- Fig. 6a: das erfindungsgemäße Verbindungsmittel mit zwei ebenen Flächenelementen und mehreren Spannstangen mit jeweils zwei stiftförmigen Verbindungsmitteln und einer Mutter.
- Fig. 6b: das erfindungsgemäße Verbindungsmittel mit zwei ebenen Flächenelementen und mehreren Spannstangen mit jeweils einem stiftförmigen Verbindungsmittel, einer Mutter, einer Spannfeder und einer Hülse.
- Fig. 7a: eine Ausführungsform des erfindungsgemäßen Verbindungsmittels mit zwei konvex gekrümmten Flächenelementen und einen an die Krümmung der Flächenelemente angepassten Klemmkeil mit zylindrischen Keilen.
- Fig. 7b: eine Ausführungsform des erfindungsgemäßen Verbindungsmittels mit zwei konvex gekrümmten Flächenelementen und einen an die Krümmung der Flächenelemente angepassten Klemmkeil mit kegelförmigen Keilen.
- Fig. 8a: eine schematische Darstellung von drei unterschiedlichen Ausführungsvarianten der Vorsprünge an den ersten Oberflächen der Flächenelemente.
- Fig. 8b: eine Detailansicht der Flächenelemente mit zahnförmigen (Fig. 8b links) und granulatförmigen (Fig. 8b rechts) Vorsprüngen.
- Fig. 9a: eine perspektivische Darstellung eines erfindungsgemäßen Verbindungsmittels samt Kopfplatte.
- Fig. 9b: eine perspektivische Darstellung eines erfindungsgemäßen Verbindungsmittels samt Kopfplatte und daran befestigtem Bauteil.
- Fig. 10a und 10b: einen Querschnitt durch ein Holzbauteil mit an der Unterseite (Fig. 10a) bzw. an der Oberseite (Fig. 10b) in die Ausnehmung eingebrachtem erfindungsgemäßen Verbindungsmittel.
- Fig. 11a: einen Querschnitt durch zwei (Fig. 11 a links) bzw. ein (Fig. 11a rechts) Holzbauteil mit eingepresstem, stiftförmigem Verbindungsmittel mit konvex gekrümmten Flächenelementen.
- Fig. 11b: eine perspektivische Darstellung der stiftförmigen Verbindungsmittel mit konvex gekrümmten Flächenelementen mit zwei Holzbauelementen sowie zwei Kopfplatten.
- Fig. 12: das erfindungsgemäße Verbindungsmittel mit jeweils zwei ersten und zweiten Flächenelementen und mehreren Klemmkeilen, wobei die zwei ersten bzw. zweiten Flächenelemente mittels einem Futterblech und einer Platte verbunden werden.
- Fig. 13: das Verbindungsmittel mit jeweils zwei ersten und zweiten Flächenelementen und mit einem durchgehenden Klemmkeil in Form einer Zahnschiene.
- Fig. 14: das erfindungsgemäße Verbindungsmittel mit jeweils zwei ersten und zweiten Flächenelementen und mehreren Klemmkeilen, wobei die zwei ersten bzw. zweiten Flächenelemente mittels Stirnverschraubungen verbunden werden.
- Fig. 15: das erfindungsgemäße Verbindungsmittel mit jeweils zwei ersten und zweiten Flächenelementen und mehreren Klemmkeilen, wobei die Klemmkeile zwischen den Flächenelementen vergossen werden.

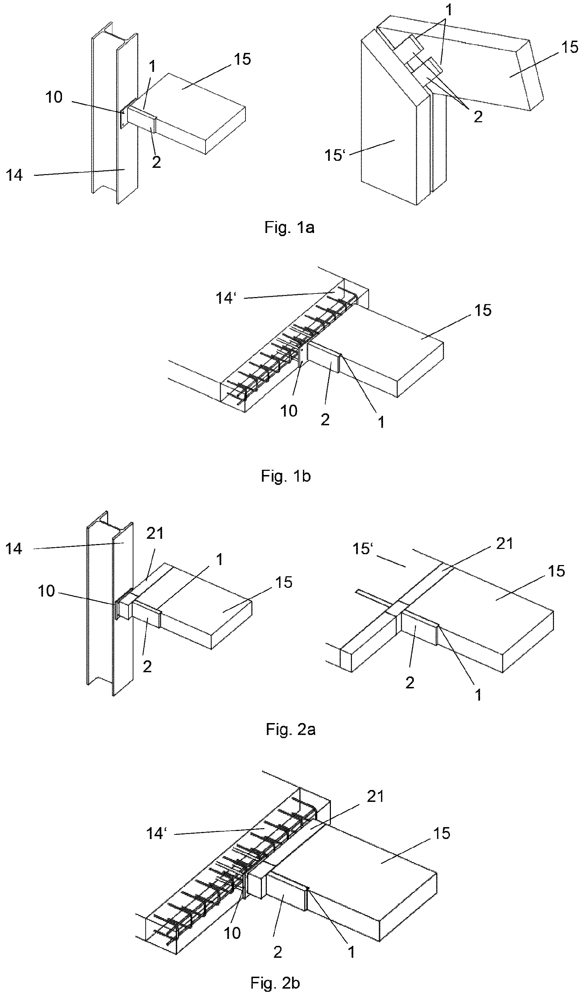

Wie in den Figuren 1a, 1b, 2a und 2b ersichtlich, ermöglicht das erfindungsgemäße Verbindungsmittel das Verbinden von Holzbauelementen 15 an verschiedensten Bauelementen 14 und lässt sich an unterschiedliche Bedingungen anpassen. In diesen Figuren ist immer nur ein Ausschnitt des Holzbauelements 15 gezeigt, um das erfindungsgemäße Verbindungsmittel besser darstellen zu können. Im Speziellen ist die Ausnehmung 16 an den Holzbauelementen 15, 15' in den Fig. 1 - 2 nicht ersichtlich.

Mithilfe des Verbindungsmittels, welches zwei Flächenelemente 1, 2 und ein Spannelement 3 umfasst, können beispielsweise zwei Holzbauelemente 15, 15' auf sehr einfache Weise verbunden werden (siehe Fig. 1a rechts). Die resultierende Kopplung weist eine hohe Tragfähigkeit und Steifigkeit auf.

Außerdem erlaubt das erfindungsgemäße Verbindungsmittel auch eine Befestigung von Holzbauelementen 15 an mineralischen Bauteilen mit Bewehrung 14' wie z.B. Stahlbeton (Fig. 1b) oder auch an Bauteilen wie Stahlträgern 14 (Fig. 1a links). Zur Verbindung des Verbindungsmittels mit dem Bauteil 14, 14' umfasst das erfindungsgemäße Verbindungsmittel in diesen Ausführungsvarianten noch eine Kopfplatte 10. An dieser Kopfplatte 10 kann das Bauteil 14, 14' fixiert werden.

Des Weiteren kann auch eine bauphysikalisch wirksamen Zwischenschicht 21, die zum Beispiel als Wärmedämmung oder luftdichte Ebene dient, zwischen dem Holzbauelement 15 und dem Bauelement 14, 14' angebracht werden, wie in den Fig. 2a und 2b dargestellt. Beispielsweise kann es sich bei der Zwischenschicht 21 auch um ein Elastomer zu schalltechnischen Entkopplung handeln. Eine Verbindung durch diese Zwischenschicht 21 kann mithilfe von stiftförmigen Verbindungsmitteln erfolgen, welche durch die Zwischenschicht 21 durchgeführt werden können.

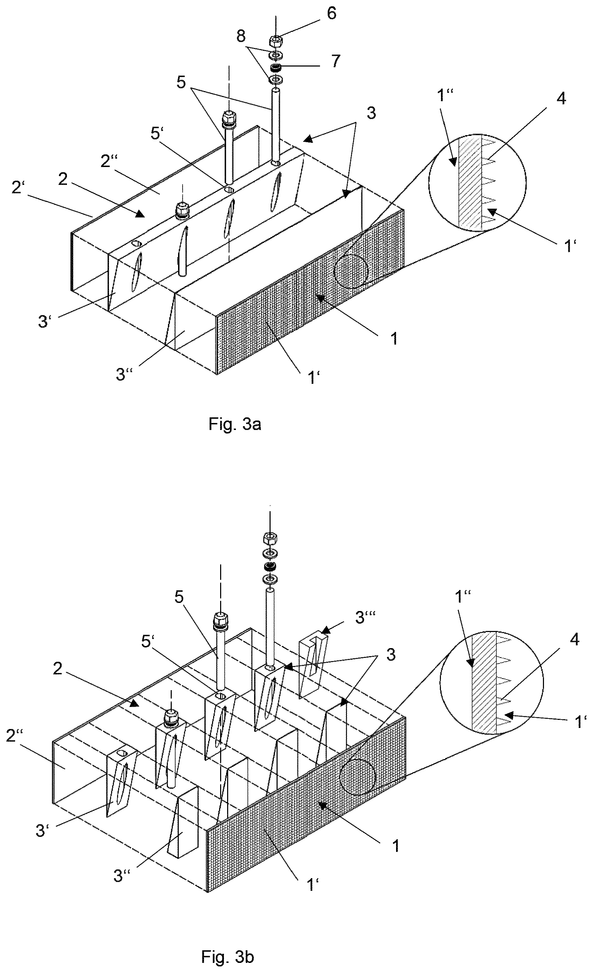

In den Figuren 3 - 7 ist das erfindungsgemäße Verbindungsmittel in unterschiedlichen Ausführungsvarianten dargestellt. Die wesentlichen Bestandteile des Verbindungsmittels sind das erste und zweite Flächenelement **1,** 2 sowie das Spannelement 3. Die Flächenelemente 1, 2 weisen jeweils eine erste und zweite Oberfläche 1', 2', 1", 2" auf. Die ersten Oberflächen 1', 2' der Flächenelemente 1, 2 umfassen Vorsprünge 4. In den Figuren 3 - 7 sind die Verbindungsmittel unter anderem in Explosionszeichnungen dargestellt, um den Aufbau des erfindungsgemäßen Verbindungsmittels besser veranschaulichen zu können. Die Vorsprünge weisen eine Spitze auf.

In der in Fig. 3a gezeigten Ausführungsvariante umfasst das Verbindungsmittel zwei Flächenelemente 1, 2 und ein Spannelement 3, welches einen ersten und einen zweiten Keil 3', 3" und ein stiftförmiges Verbindungsmittel 5 umfasst. Die Keile 3', 3" erstrecken sich jeweils über die gesamte Länge der Flächenelemente 1, 2 und weisen eine sich verjüngende Keilform auf. Der erste und der zweite Keil 3', 3" werden gegenüberliegend zwischen den Flächenelementen 1, 2 angeordnet, wobei der erste Keil 3' zum zweiten Keil 3" um 180° verdreht ist. Anders ausgedrückt, weisen die beiden verjüngten Enden des ersten und zweiten Keils 3', 3" zueinander. Bei dem stiftförmigen Verbindungsmittel kann es sich um eine Gewindestange handeln. Der zweite Keil 3" kann eine Gewinde-Bohrung 5" umfassen. Mithilfe des Innengewindes dieser Bohrung 5" kann der zweite Keil 3" auf die Gewindestange 5 aufgeschraubt werden und steht dann mit dieser in Eingriff. Das heißt die Grundform der Bohrung 5" entspricht im Wesentlichen der Grundform der Gewindestange 5. Bevorzugt weist auch der erste Keil 3' eine Bohrung 5' auf, welche jedoch kein Innengewinde umfassen kann. Die Grundform der Bohrung 5', 5" kann identisch sein. Der erste Keil 3' mit Bohrung 5' ohne Innengewinde kann somit einfach auf die Gewindestange 5 geschoben werden. Oberhalb dieses ersten Keils 3' kann zur Fixierung eine Mutter 6 auf die Gewindestange 5 geschraubt werden. Zusätzlich können noch Unterlegscheiben 8 und/oder eine Spannscheibe, Tellfeder, Federringe 7 oder ein Spannfederelement zwischen Mutter 6 und ersten Keil 3' angebracht werden.

Das Verbindungsmittel kann zur Befestigung eines Holzbauelements 15 an einem anderen Bauelement 14 verwendet werden, indem die Flächenelemente 1, 2 gegenüberliegend in eine Ausnehmung des Holzbauelements 16 eingelegt werden. Die ersten Oberflächen der Flächenelemente 1, 2, welche die Vorsprünge 4 aufweisen, liegen an dem Holzbauelement 15 an und erlauben eine reib- und formschlüssige Verbindung der Flächenelemente 1, 2 mit dem Holzbauelement 15. Mithilfe des Spannelements 3 kann eine biegesteife Verbindung realisiert werden, indem das Spannelement 3 zwischen den Flächenelementen 1, 2 an den zweiten Oberflächen 1", 2" verklemmt wird. Gemäß der Ausführungsvariante in Fig. 3a wird dazu bevorzugt vor dem Einbringen der Flächenelemente 1, 2 in die Ausnehmung des Holzbauelements 16 der zweite Keil 3" mit dem stiftförmige Verbindungsmittel 5 in Eingriff gebracht und samt stiftförmigen Verbindungsmittel 5 zwischen die Flächenelemente 1, 2 geschoben. Auf das freie Ende des stiftförmigen Verbindungsmittels 5 kann dann der erste Keil 3' aufgeschoben werden. Danach können die Mutter 6 und eventuell Unterlegscheiben 8 und Spannscheiben 7 oberhalb des ersten Keils 3' auf mit dem stiftförmigen Verbindungsmittel 5 in Eingriff gebracht werden. Danach kann das erfindungsgemäße Verbindungsmittel in die Ausnehmung eines Holzbauelements 16 eingebracht werden. In der in Fig. 3a gezeigten Ausführungsvariante wird die Mutter 6 dann solange festgezogen, bis das Spannelement 3 zwischen den Flächenelementen 1, 2 formschlüssig verklemmt ist. Dadurch werden die Vorsprünge 4 an den Flächenelementen 1, 2 immer tiefer in das Holzbauelement 15 gepresst. Durch den Einpressvorgang der Spannelemente 3 ändert sich somit auch die Distanz der Flächenelemente 1, 2. Da das Spannelement 3 zwischen den Flächenelementen **1,** 2 verbleibt, wird ein Herauswandern der Vorsprünge 4 aus dem Holzbauelement 15 verhindert.

Die Keile 3', 3" können jedoch auch mithilfe eines Passbolzen oder einer Gewinde-Spindel zwischen die Flächenelemente **1,** 2 eingepresst werden.

Die in den Figuren 3b - 6b dargestellten Verbindungsmittel unterscheiden sich in ihren Ausführungsformen durch die Form der Keile 3', 3",3‴ von dem in Fig. 3a dargestellten Verbindungsmittel. Bei den Flächenelementen 1, 2 in den Ausführungsvarianten in Fig. 3 - 6 handelt es sich um Platten, welche bevorzugt eine Stärke von 3 bis 40 mm aufweisen.

In der Ausführungsvariante in Fig. 3b umfasst das Spannelement 3 des Verbindungsmittels nicht zwei sich über die gesamte Länge der Flächenelemente 1, 2 erstreckende Keile, sondern mehrere Klemmkeile mit jeweils einem ersten und zweiten Keil 3', 3". Die Keile 3'**,** 3" weisen wiederum die typische sich verjüngende Keilform auf und jeder Klemmkeil umfasst zusätzlich ein stiftförmiges Verbindungsmittel 5, mit welchem die Keile 3'**,** 3" in Eingriff gebracht werden können. Hierfür weist der erste Keil 3' und der zweite Keil 3" wieder jeweils eine Bohrung 5', 5'' auf, wobei die Bohrungen 5', 5" ein Innengewinde umfassen können. Zusätzlich können die Klemmkeile noch eine Mutter 6 umfassen, welche ebenfalls mit dem stiftförmigen Verbindungsmittel 5, bevorzugt oberhalb des ersten Keils 3'**,** in Eingriff gebracht werden kann. Außerdem kann zwischen Mutter 6 und erstem Keil 3' noch zumindest eine Unterlegscheibe 8 angebracht werden. Es kann auch noch eine Spannscheibe 7 zwischen Mutter 6 und erstem Keil 5' angebracht werden. Dazwischen können jeweils Unterlegscheiben 8 appliziert werden. Die Spannscheibe 7 erlaubt einen Erhalt der hohen Vorspannung in der Schraubverbindung. Aufgrund von Federkräften wird ein Losdrehen der Mutter 6 von dem stiftförmigen Verbindungsmittel 5 verhindert.

In einer bevorzugten Ausführungsvariante in Fig. 3b weist der Keil 3‴ anstelle der Bohrung 5' eine Nut auf welche das stiftförmige Verbindungsmittel 5 aufnimmt mit welchem der Keil 3‴ in Eingriff gebracht wird. Die Nut kann jede Sektion aufweisen die geeignet ist das stiftförmige Verbindungsmittel 5 aufzunehmen.

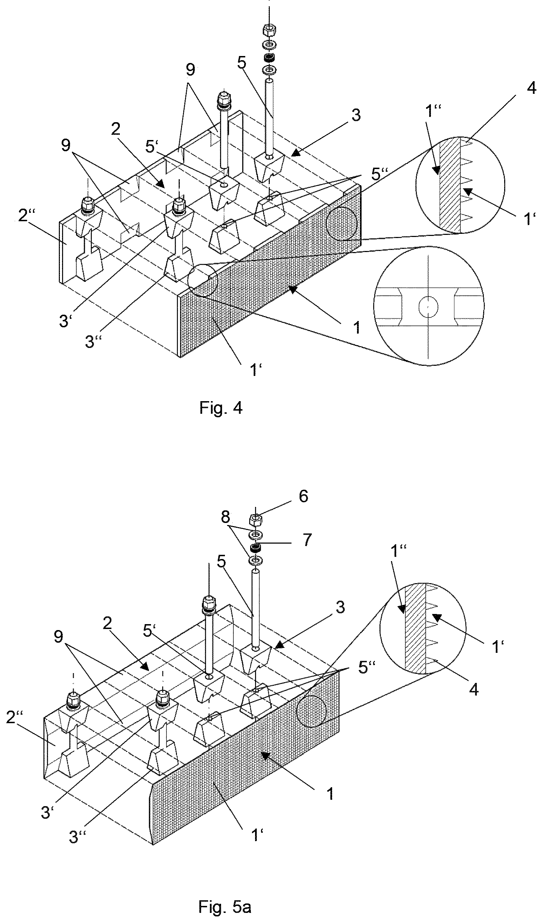

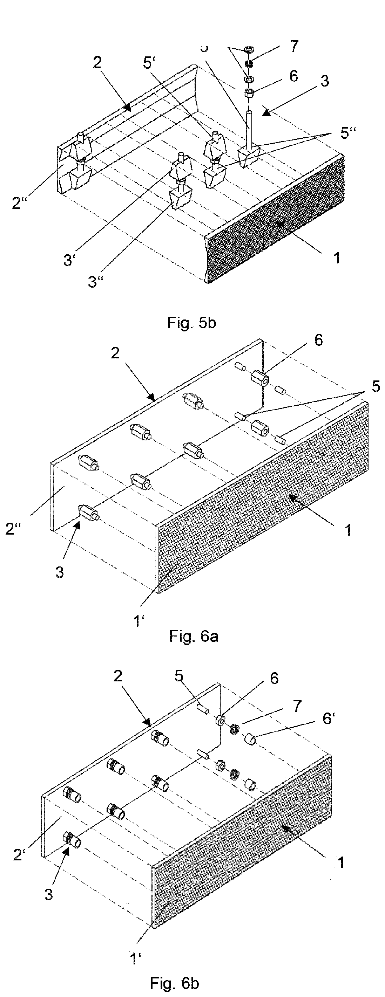

Die in den Fig. 4, 5a und 5b gezeigten Spannelemente 3 unterscheiden sich durch die Form des ersten und zweiten Keils 3', 3",3‴ von den in Fig. 3b gezeigten Spannelementen 3. Aufgrund der Form der Keile 3', 3",3‴ weisen die den Klemmkeilen zugewandten zweiten Oberflächen der Flächenelemente 1", 2" außerdem noch Spannelement-Ausnehmungen 9 auf. Durch die Spannelement-Ausnehmungen 9 entstehen an den zweiten Oberflächen der Flächenelemente 1", 2" Schrägflächen, an welchen die Keile 3', 3",3‴ anliegen können. Diese Schrägflächen sind jeweils an gegenüberliegenden Stellen an den zweiten Oberflächen der Flächenelemente 1", 2" ausgeführt. Fig. 4 weist mehrere Spannelement-Ausnehmungen 9 auf, wobei jeweils an der Oberseite und Unterseite der Flächenelemente 1, 2 entgegengesetzt geneigte Schrägflächen an den zweiten Oberflächen der Flächenelemente 1, 2 ausgeführt sind. Fig 5a und 5b weisen jeweils durchgehende Ausnehmungen 9 an der Oberseite und Unterseite der Flächenelemente 1, 2 auf, welche wiederum entgegengesetzt geneigt sind. Daher können in diesen Ausführungsvarianten die Klemmkeile an jeder beliebigen Stelle entlang der Flächenelemente 1, 2 angebracht werden. Die Keile 3', 3" in den Ausführungsvarianten in Fig. 4, 5a und 5b sind trapezförmig. Die Keile 3', 3",3‴ weisen wiederum Bohrungen 5', 5" oder Nuten auf, um mit dem stiftförmigen Verbindungsmittel 5 in Eingriff gebracht werden zu können. Die Anbringung der Keile 3', 3",3‴ funktioniert daher analog zu den in den Fig. 3a und 3b gezeigten Ausführungsvarianten.

In der Ausführungsvariante in Fig. 5b weisen die Klemmkeile die gleichen Keile 3', 3" wie in den Fig. 4 und 5a auf. Allerdings weisen die verjüngten Enden der Keile 3', 3" in dieser Ausführungsvariante voneinander weg, während sie in den Fig. 4 und 5a zueinander weisen. Ein Vorteil der in Fig. 5b gezeigten Ausführungsvariante ist, dass die Spannelement-Ausnehmungen 9 in der Mitte der Flächenelemente 1, 2 erfolgen. Daher steht in diesem Fall an den Randzonen des Verbindungsmittels, das heißt an den Ober- und Unterseiten der Flächenelemente 1, 2 mehr Material zur Verfügung. Da im Üblichen an den Randzonen höhere Spannungen auftreten, kann somit eine sicherere und stabilere Verbindung garantiert werden.

Die Spannelement-Ausnehmungen 9 verlaufen in Fig. 5b wiederum über die gesamte Länger der Flächenelemente 1, 2, an welchen daher an jeglicher Stelle die Klemmkeile verklemmt werden können.

Fig. 6a und 6b zeigen eine weitere Ausführungsform des erfindungsgemäßen Verbindungsmittels mit einem Spannelement 3, welches eine Spannstange umfasst. Diese Spannstange wird quer zwischen den Flächenelementen 1, 2 verspannt und erlaubt ein Einpressen der Vorsprünge 4 an den ersten Oberflächen der Flächenelemente 1', 2' in ein Holzbauelement 15. Die Spannstangen können wie in Fig. 6a gezeigt beispielsweise eine Mutter 6, vorzugsweise eine Langmutter, sowie zwei stiftförmige Verbindungsmittel 5, welche mit der Mutter 6 in Eingriff stehen, umfassen. Durch Verdrehen der Mutter 6 kann die Länge der Spannstange verändert werden. Das heißt das Verdrehen der Mutter 6 ermöglicht den Einpressvorgang der Flächenelemente 1, 2 in ein Holzbauelement. Außerdem können die Spannstangen wie in Fig. 6b dargestellt auch nur ein stiftförmiges Verbindungsmittel 5 umfassen, welches mit einer Mutter 6, einer Spannfeder 7 und einer Hülse 6' in Eingriff stehen kann. Die Länge der Spannstange kann wiederum durch Verdrehen der Mutter 6 verändert werden.

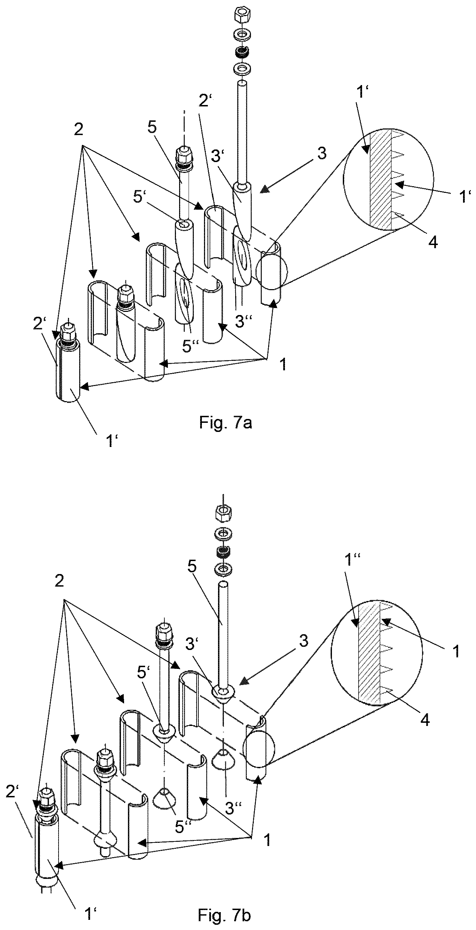

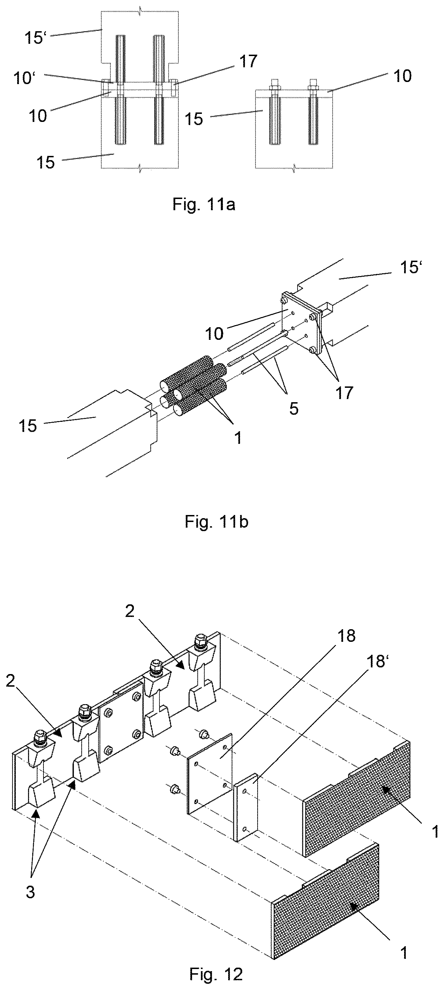

Eine weitere Ausführungsvariante des erfindungsgemäßen Verbindungsmittels ist in den Fig. 7a und 7b dargestellt. Das Verbindungsmittel ist dabei jeweils in vier unterschiedlichen Ansichten gezeigt, um den Aufbau zu veranschaulichen. In dieser Ausführungsvariante sind die Flächenelemente 1, 2 konvex gekrümmt und weisen an den ersten Oberflächen 1', 2' Vorsprünge 4 auf. Diese ersten Oberflächen 1', 2' können einem Holzbauelement 15 zugewandt sein, sodass die Vorsprünge 4 in das Holzbauelement gepresst werden können. Die Spannelemente 3 der Verbindungsmittel in den Fig. 7a und 7b können einerseits zylindrische Keile 3', 3" (Fig. 7a) oder kegelförmige Keile 3', 3" (Fig. 7b) umfassen. Die Krümmung und/oder der Radius der Keile 3', 3" entsprechen dabei im Wesentlichen der Krümmung und/oder dem Radius der gekrümmten Flächenelemente 1, 2. Fig. 11a und 11b zeigen Anwendungsbeispiele dieser Ausführungsvariante dieser stiftförmigen Verbindungsmittel mit Vorsprüngen, welche beispielsweise einen eingeklebten Bolzen ersetzten können. Auf der linken Seite in Fig. 11a und in Fig. 11b sind zwei Holzbauelemente 15, 15' mithilfe der erfindungsgemäßen Verbindungsmittel und zwei Kopfplatten 10, 10' verbunden. Die Verbindungsmittel werden dabei mithilfe von Muttern 6 an den Kopfplatten 10, 10' fixiert. Die Kopfplatten 10, 10' können danach mit Schrauben 17 aneinandergeschraubt werden. Auf der rechten Seite in Fig. 11a ist nur ein Holzbauelement 15 mit fixierten Verbindungsmitteln und einer Kopfplatte 10 dargestellt.

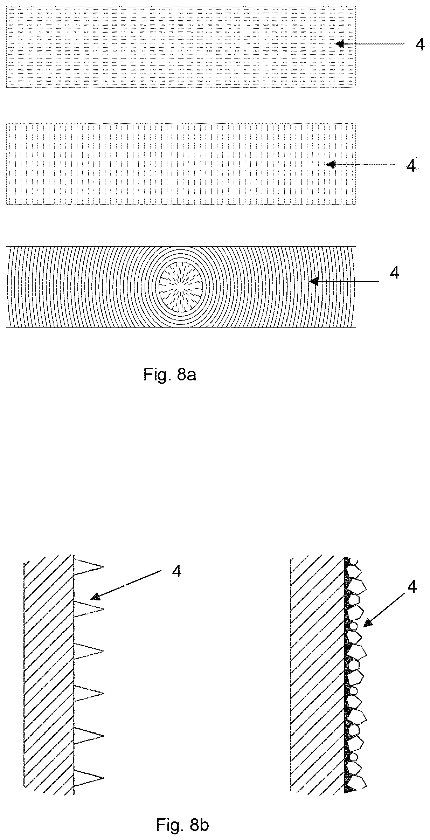

Wie in den Fig. 8a und 8b dargestellt, kann die Dichte und die Art der Vorsprünge 4 an den ersten Oberflächen der Flächenelemente 1'**,** 2' variieren. In Fig. 8a sind beispielhaft drei verschiedene Anordnungsmöglichkeiten der Vorsprünge 4 gezeigt: quer (Fig. 8a oben), längs (Fig. 8a Mitte) und radial (Fig. 8a unten). In Fig. 8b sind auf der linken Seite zahnförmige Vorsprünge 4 und auf der rechten Seite granulatförmige Vorsprünge 4 dargestellt. Die Granulate können dabei auf die ersten Oberflächen der Flächenelemente 1', 2' aufgeklebt werden. Andere Vorsprünge 4 wie z.B. Zähne, Zinken, Haken oder Zacken können direkt aus dem Flächenelement 1, 2 ausgestanzt bzw. in einer speziellen Oberflächenbehandlung hergestellt werden.

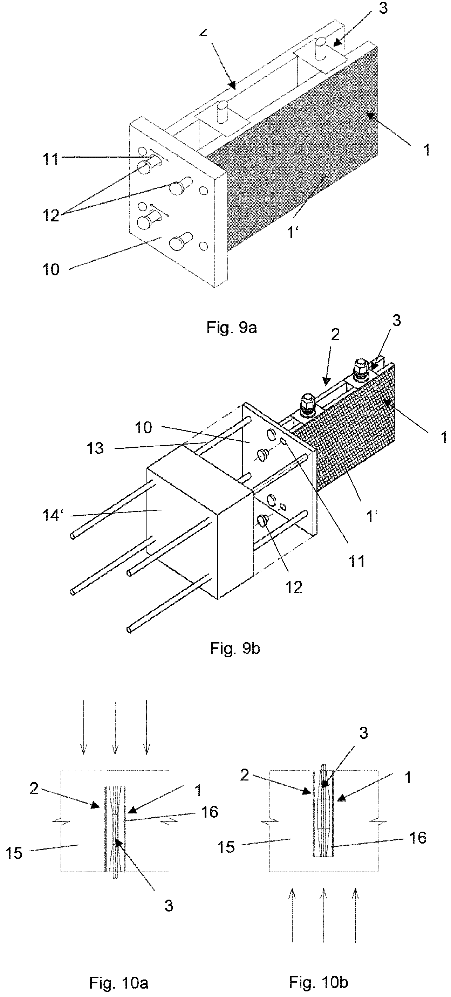

In den Fig. 9a und 9b wird eine Möglichkeit der Verbindung der Flächenelemente 1, 2 mit einer Kopfplatte 10 gezeigt. Die Flächenelemente 1, 2, bei welchen es sich in der Ausführungsvariante in Fig. 9a und 9b um Platten handelt, können dabei mithilfe eines stiftförmigen Verbindungsmittels 12, beispielsweise eines Bolzens oder einer Schraube, mit der Kopfplatte verbunden werden. Hierfür weist die Kopflatte 10 zumindest zwei Ausnehmungen auf. Zumindest eine Ausnehmung hat dabei die Form eines Langlochs 11, sodass das stiftförmige Verbindungsmittel 12 entlang des Langlochs 11 verschiebbar ist. Dadurch lässt sich die Distanz zwischen den Flächenelementen 1, 2 trotz angeschlossener Kopfplatte 10 noch variieren. Das heißt das erfindungsgemäße Verbindungsmittel kann samt Kopfplatte 10 an einem Holzbauelement 15 angebracht werden, indem die Flächenelemente 1, 2 in die Ausnehmung des Holzbauelements 15 eingebracht werden und danach mithilfe des Spannelements 3 mit dem Holzbauelement 15 form- und reibschlüssig verbunden werden. Die Kopfplatte 10 kann an einem weiteren Bauteil 14, 14', wie beispielsweise einem Stahlträger 14 oder einem mineralischen Bauteil mit Bewehrung 14', mithilfe von stiftförmigen Verbindungsmitteln 13 fixiert werden.

Bei der Ausnehmung im Holzbauelement 16, in welche die Flächenelemente 1, 2 eingebracht werden können, kann es sich um einen durchgängigen Spalt handeln. Wie in den Fig. 10a und 10b gezeigt kann es sich bei der Ausnehmung am Holzbauelement 16 aber auch beispielsweise um einen Schlitz an der Ober- (Fig. 10b) oder Unterseite (Fig. 10a) des Holzbauelements 15 handeln. Indem das Holzbauelement 15 nur Ausnehmungen 16 an der Unterseite (Fig. 10a) umfasst, wird ein Eindringen von Nässe oder Feuchtigkeit von der Oberseite verhindert. Die Oberseite des Holzbauelements 15 weist in dieser Ausführungsvariante keine Ausnehmungen auf, sodass die Dichtheit nicht verringert ist. Eine solche Anbringung des erfindungsgemäßen Verbindungsmittels bietet sich demnach speziell an Holzbauteilen 15 an, welche Wasser bzw. Regen ausgesetzt sind, wie z.B. die Holzbauelemente eines Dachstuhls.

Im Gegensatz dazu können die Verbindungsmittel auch an Schlitzen an der Oberseite des Holzbauelements 15 angebracht werden. Diese Ausführungsvariante bietet einen guten Brandschutz, da die Unterseite der Holzbauelemente 15 keine Ausnehmungen umfassen. Daher würde sich eine solche Bauweise beispielsweise für Holzbauelemente 15 in Innenräumen anbieten.

In den Fig. 12 - 15 sind weitere Ausführungsvarianten des erfindungsgemäßen Verbindungsmittels gezeigt, welches es auch ermöglichen, Bautoleranzen auszugleichen. Genauer gesagt, bieten die Verbindungsmittel eine Möglichkeit zur Überbrückung von Toleranzen im Stoßbereich der Holzbau-Holzbau/Bauelemente. In diesen Ausführungsvarianten umfasst das Verbindungsmittel zwei erste und zwei zweite Flächenelemente 1, 2. Bei der Verbindung zweier Holzbauelemente 15, 15' kann somit jeweils ein erstes und zweites Flächenelement 1, 2 an einem der Holzbauelemente 15, 15' angebracht werden. Aufgrund von Bautoleranzen können am Plattenstoß der Holzbauelemente 15, 15' die Ausnehmungen 16 nicht genau überlappen (Fig. 12, 14 und 15). Aufgrund dieses seitlichen Versatzes der Ausnehmungen 16 ist es nicht möglich, nur jeweils ein Flächenelement 1, 2 entlang der Ausnehmungen 16 der Holzbauelemente einzupressen. Die zwei ersten bzw. zweiten Flächenelemente 1, 2 können dann wie in den Fig. 12, 14 und 15 dargestellt nicht in einer Ebene angebracht werden. Um diesen Versatz auszugleichen, können wie in Fig. 12 gezeigt Futterbleche 18' angebracht werden, welche den Versatz ausgleichen. Die beiden ersten bzw. zweiten Flächenelemente 1, 2 werden mittels mit einer weiteren Platte 18 verbunden.

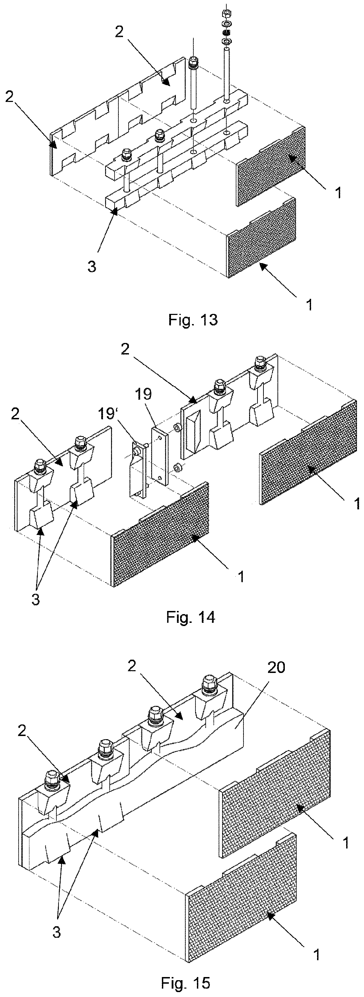

Außerdem kann der Versatz gemäß Fig. 14 ausgeglichen werden, indem an einem der ersten und an einem der zweiten Flächenelementen 1, 2 jeweils eine Stirnverschraubung mit Langlöchern 19, 19' fixiert wird. Die Langlöcher erlauben eine Anpassung an die Größe des Versatzes.

In einer weiteren Ausführungsvariante können die Öffnungen in den Ausnehmungen wie in Fig. 15 im Nachhinein mittels Reaktionsharzen ausgegossen werden. Dies erlaubt wiederum einen Ausgleich der Bautoleranzen.

Die Öffnungen an den Ausnehmungen der Holzbau- und Bauelementen 15, 14 können selbstverständlich auch in allen anderen Ausführungsvarianten ausgegossen werden. Bei den Reaktionsharzen kann es sich zum Beispiel um Polymerbeton, Epoxidharz oder auch Mörtel oder Beton handeln. Das Ausgießen verhindert ein Eindringen von Feuchtigkeit bzw. die Entstehung von Kondensat. Durch diesen Verguss entstehen Composite die sich an der Übertragung der Lasten zwischen den Bauelementen beteiligen können.

Eine weitere Möglichkeit mithilfe des erfindungsgemäßen Verbindungsmittels die Übertragung von Kräften zu optimieren ist in **Fig.** 13 dargestellt. Einerseits erlaubt das durchgehende Spannelement 3, welches die Form einer Zahnschiene aufweist, eine Verbindung der zwei ersten bzw. zweiten Flächenelemente 1, 2 ohne zusätzliche Verbindungsmittel. Andererseits können die zweiten Oberflächen der Flächenelemente 1", 2", das heißt die Oberflächen an welchen das Spannelement 3 anliegt, in dieser Ausführungsvariante ebenfalls Vorsprünge wie beispielsweise eine Verzahnung aufweisen. Daher kann das Spannelement 3 zusätzlich zur Übertragung von Kräften dienen.

## Patentansprüche

1. Verbindungsmittel zum Verbinden eines eine Ausnehmung aufweisenden Holzbauelements (15) mit einem weiteren Bauelement (14), umfassend
• zumindest ein erstes Flächenelement (1) und zumindest ein zweites Flächenelement (2) und,
• zumindest ein Spannelement (3),
wobei das zumindest eine erste und zweite Flächenelement (1, 2) sich gegenüberliegen und voneinander distanziert sind beim Einlegen des Verbindungsmittel samt Flächenelement (1, 2) und Spannelemente (3) in die Ausnehmung der Holzbauelemente,, wobei die Distanz beim Spannen des Spannelements (3) veränderlich ist, wobei das zumindest eine erste und zweite Flächenelement (1, 2) jeweils eine erste (1', 2') und zweite Oberfläche (1", 2") aufweisen, wobei die zweiten Oberflächen des ersten und zweiten Flächenelements (1", 2") zueinander weisen, wobei die ersten Oberflächen des ersten und zweiten Flächenelements (1', 2') Vorsprünge (4) aufweisen, wobei das zumindest eine Spannelement (3) formschlüssig zwischen dem zumindest einen ersten und zweiten Flächenelement (1, 2) verklemmbar ist und dass es sich bei dem zumindest einem Spannelement (3) um einen Klemmkeil handelt und der zumindest eine Klemmkeil ein stiftförmiges Verbindungsmittel (5), vorzugsweise einen Passbolzen, eine Gewindestange oder eine Spindel, und zumindest einen Keil (3',3‴) umfasst, wobei der zumindest eine Keil (3',3‴) eine Bohrung oder eine Nut umfasst, mit welcher das stiftförmige Verbindungsmittel (5) in Eingriff steht und dass der zumindest eine Klemmkeil zumindest einen ersten und zweiten Keil (3', 3",3‴) umfasst, wobei die Keile (3', 3",3‴) dieselbe sich verjüngende Grundform aufweisen und derart mit dem stiftförmigen Verbindungmittel (5) in Eingriff stehen, dass die verjüngten Enden der Keile (3', 3",3‴) zueinander oder voneinander weg weisen, wobei die Keile (3', 3",3‴) mit zumindest einer Keilfläche an der zweiten Oberfläche des ersten und/oder zweiten Flächenelements (1'', 2") anliegen.

2. Verbindungsmittel nach Anspruch 1, **dadurch gekennzeichnet, dass** die Vorsprünge (4) über die gesamten ersten Oberflächen (1', 2') der Flächenelemente (1, 2) verteilt sind, wobei die Form der Vorsprünge (4) ausgewählt ist aus der Gruppe Zacken, Zinken, Zähne, Rillen, Kerven, Nuten, Haken oder Granulate.

3. Verbindungsmittel nach Anspruch 1, **dadurch gekennzeichnet, dass** die Vorsprünge (4) spitz sind.

4. Verbindungsmittel nach einem der Ansprüche 1, 2 oder 3, **dadurch gekennzeichnet, dass** die Flächenelemente (1, 2) aus Stahl, Edelstahl, Aluminium oder Kunststoffen bestehen.

5. Verbindungsmittel nach einem der Ansprüche 1 bis 4, **dadurch gekennzeichnet, dass** es sich bei den Flächenelementen (1, 2) um Platten handelt, wobei die Platten eine Stärke von 3 bis 40 mm aufweisen.

6. Verbindungsmittel nach einem der Ansprüche 1 bis 5, **dadurch gekennzeichnet, dass** das erste und zweite Flächenelement (1, 2) konvex gekrümmt sind, wobei das erste und zweite Flächenelement (1, 2) mit dem dazwischen angeordneten Spannelement (3) ein stiftförmiges Verbindungsmittel bilden.

7. Verbindungsmittel nach einem der Ansprüche 1 bis 6, wobei die zweiten Oberflächen des ersten und zweiten Flächenelements (1'', 2") gegenüberliegend jeweils zumindest eine Spannelement-Ausnehmung (9) umfassen, wobei das zumindest eine Spannelement (3) in der zumindest einen Spannelement-Ausnehmung (9) zwischen erstem und zweitem Flächenelement (1, 2) verklemmbar ist.

8. Verbindungsmittel nach einem der Ansprüche 1 bis 7, **gekennzeichnet durch** eine Kopfplatte (10), wobei die Kopfplatte (10) mit dem ersten und zweiten Flächenelement (1, 2) verbindbar ist.

9. Verbindungsmittel nach einem der Ansprüche 1 bis 8, **dadurch gekennzeichnet, dass** die Distanz zwischen den Platten (1,2) 4mm bis 80mm beträgt.

10. System umfassend ein Verbindungsmittel nach einem der Ansprüche 1 bis 9 und zwei Holzbauelemente (15, 15'), wobei die Holzbauelemente (15, 15') aneinander angrenzende Ausnehmungen (16) aufweisen,
**dadurch gekennzeichnet, dass** das zumindest eine erste und zumindest eine zweite Flächenelement (1, 2) gegenüberliegend in den aneinander angrenzenden Ausnehmungen der Holzbauelemente (16) fixiert sind, wobei die ersten Oberflächen der Flächenelemente (1', 2') an den Holzbauelementen (15, 15') anliegen, wobei die Vorsprünge (4) an der ersten Oberfläche (1', 2') in die Holzbauelemente (15, 15') eingepresst sind, wobei mit dem Verbindungsmittel die Holzbauelemente (15,15') form- und kraftschlüssig verbunden sind.

11. System umfassend ein Verbindungsmittel nach Anspruch 10, ein eine Ausnehmung aufweisendes Holzbauelement (15) und ein Bauelement (14),
**dadurch gekennzeichnet, dass** das erste und zweite Flächenelement (1, 2) gegenüberliegend in der Ausnehmung des Holzbauelements (16) fixiert sind, wobei die ersten Oberflächen der Flächenelemente (1', 2') an dem Holzbauelement (15) anliegen, wobei die Vorsprünge (4) an der ersten Oberfläche (1', 2') in das Holzbauelement (15) eingepresst sind, wobei die Kopfplatte (10) am Bauelement (14) fixiert ist, wobei mit dem Verbindungsmittel das Holzbauelement (15) mit dem Bauelement (14) form- und kraftschlüssig verbunden sind.

12. Verfahren zum Verbinden von mindestens zwei Holzbauelementen (15, 15') mit einem Verbindungsmittel nach einem der Ansprüche 1 - 9, wobei die Holzbauelemente nebeneinander angeordnet sind und eine durchgehende Ausnehmung (16) aufweisen, **gekennzeichnet durch** die Schritte
• Einlegen des Verbindungsmittel samt Flächenelemente (1, 2) und Spannelemente (3) in die Ausnehmung der Holzbauelemente (16), wobei die erste Oberfläche (1', 2') der Flächenelemente (1, 2) jeweils in Richtung der Holzbauelemente (15, 15') weist,
• Spannen des Spannelements (3) soweit, bis die Flächenelemente (1, 2) mit den Holzbauelementen (15) form- und kraftschlüssig verbunden sind,
wobei die Vorsprünge (4) während des Spannens des zumindest einen Spannelements (3) immer tiefer in das Holzbauelement (15) eingepresst werden und schlussendlich einrasten, wobei das zumindest eine Spannelement (3) nach dem Einrasten derart vorgespannt wird, dass die Flächenelemente (1, 2) permanent überdrückt sind.

13. Verfahren zum Verbinden eines eine Ausnehmung (16) aufweisenden Holzbauelements (15) mit einem weiteren Bauelement (14) mit einem Verbindungsmittel nach Anspruch 1 mit an den Flächenelementen (1, 2) angebrachter Kopfplatte (10), **gekennzeichnet durch** die Schritte
• Einlegen des Verbindungsmittel samt Flächenelemente (1, 2) und Spannelemente (3) in die Ausnehmung der Holzbauelemente (16), wobei die erste Oberfläche (1', 2') der Flächenelemente (1, 2) jeweils in Richtung der Holzbauelemente (15, 15') weist,
• Spannen des Spannelements (3) soweit, bis die Flächenelemente (1, 2) mit den Holzbauelementen (15) form- und kraftschlüssig verbunden sind,
• Verschrauben der Kopfplatte (10) am Bauteil (14).

## Claims

1. A fastening means for connecting a timber structural element (15) having a recess to a further structural element (14), comprising
· at least one first surface element (1) and at least one second surface element (2), and
· at least one clamping element (3),
wherein at least one first and second surface element (1, 2) face one another and are spaced apart when the connecting means, comprising the surface elements (1, 2) and the tensioning element (3), is inserted into the recess of the timber structural elements, the distance between them being variable when the tensioning element (3) is tensioned, wherein the at least one first and second surface element (1, 2) each having a first (1', 2') and a second surface (1'", 2"'), the second surfaces of the first and second surface elements (1'", 2"') facing one another, the first surfaces of the first and second surface elements (1', 2') have projections (4), wherein the at least one tensioning element (3) can be clamped in a form-fitting manner between the at least one first and second surface element (1, 2), and wherein the at least one tensioning element (3) is a clamping wedge, and the at least one clamping wedge comprises a pin-shaped connecting means (5), preferably a fitting pin, a threaded rod or a spindle, and at least one wedge (3', 3‴, 3ʺʺ), wherein the at least one wedge (3', 3‴, 3ʺʺ) comprises a bore or a groove with which the pin-shaped connecting means (5) engages, and that the at least one clamping wedge comprises at least a first and second wedge (3', 3'", 3ʺʺ) comprises at least one first and second wedge (3', 3'", 3ʺʺ), wherein the wedges (3', 3'", 3ʺʺ) have the same tapered basic shape and engage with the pin-shaped connecting element (5) in such a way that the tapered ends of the wedges (3', 3", 3‴) face towards or away from one another, wherein the wedges (3', 3", 3‴) abut against the second surface of the first and/or second surface element (1", 2") with at least one wedge face.

2. A fastening means according to claim 1, **characterised in that** the projections (4) are distributed across the entire first surfaces (1', 2') of the surface elements (1, 2), wherein the shape of the projections (4) is selected from the group comprising prongs, tines, teeth, grooves, notches, slots, hooks or granules.

3. A fastening means according to claim 1, **characterised in that** the projections (4) are pointed.

4. A fastening means according to any one of claims 1, 2 or 3, **characterised in that** the surface elements (1, 2) are made of steel, stainless steel, aluminium or plastics.

5. A fastening means according to any one of claims 1 to 4, **characterised in that** the surface elements (1, 2) are plates, the plates having a thickness of 3 to 40 mm.

6. A fastening means according to any one of claims 1 to 5, **characterised in that** the first and second surface elements (1, 2) are convexly curved, whereby the first and second surface elements (1, 2), together with the clamping element (3) arranged between them, form a pin-shaped fastener.

7. A fastening means according to any one of claims 1 to 6, wherein the second surfaces of the first and second surface elements (1", 2") each comprise at least one tensioning element recess (9) opposite one another, wherein the at least one tensioning element (3) can be clamped in the at least one tensioning element recess (9) between the first and second surface elements (1, 2).

8. A fastening means according to any one of claims 1 to 7, **characterised by** a head plate (10), wherein the head plate (10) is connectable to the first and second surface elements (1, 2).

9. A fastening means according to any one of claims 1 to 8, **characterised in that** the distance between the plates (1, 2) is between 4 mm and 80 mm.

10. A system comprising a connecting means according to any one of claims 1 to 9 and two timber structural elements (15, 15'), wherein the timber structural elements (15, 15') have adjacent recesses (16),
**characterised in that** the at least one first and at least one second surface element (1, 2) are fixed in an opposing manner within the adjacent recesses of the timber structural elements (16), wherein the first surfaces of the surface elements (1', 2') bear against the timber structural elements (15, 15'), wherein the projections (4) on the first surfaces (1', 2') are pressed into the timber structural elements (15, 15'), whereby the timber structural elements (15, 15') are connected to the connecting means by both form-fit and force-fit.

11. A system comprising a connecting means according to claim 10, a timber structural element (15) having a recess, and a structural element (14),
**characterised in that** the first and second surface elements (1, 2) are fixed in opposite positions within the recess of the timber structural element (16), the first surfaces of the surface elements (1', 2') bearing against the timber structural element (15), and the projections (4) on the first surface (1', 2') are pressed into the timber structural element (15), the head plate (10) being fixed to the structural element (14), and the timber structural element (15) and the structural element (14) being connected to one another by the connecting means by both positive and frictional engagement.

12. A method for joining at least two timber structural elements (15, 15') using a connecting means according to any one of claims 1-9, wherein the timber structural elements are arranged side by side and have a through recess (16), **characterised by** the steps
· inserting the fastening means, together with the surface elements (1, 2) and clamping elements (3), into the recess (16) of the timber structural elements, wherein the first surface (1', 2') of each of the surface elements (1, 2) faces towards the timber structural elements (15, 15'),
· tensioning the tensioning element (3) until the surface elements (1, 2) are connected to the timber structural elements (15) by both form-fit and force-fit,
whereby the projections (4) are pressed ever deeper into the timber structural element (15) whilst the at least one tensioning element (3) is being tensioned and finally snap into place, whereby the at least one tensioning element (3) is pre-tensioned after snapping into place in such a way that the surface elements (1, 2) are permanently over-tensioned.

13. A method for connecting a timber structural element (15) having a recess (16) to a further structural element (14) using a connecting means according to claim 1, comprising a head plate (10) attached to the surface elements (1, 2), **characterised by** the steps
· inserting the connecting means, together with the surface elements (1, 2) and tensioning elements (3), into the recess (16) of the timber structural elements (15), wherein the first surface (1', 2') of each surface element (1, 2) faces in the direction of the timber structural elements (15, 15'),
· Tensioning the tensioning element (3) until the surface elements (1, 2) are connected to the timber structural elements (15) by both form-fit and force-fit,
· Screwing the head plate (10) to the structural component (14).

## Revendications

1. Moyen de fixation destiné à relier un élément de construction en bois (15) présentant un évidement à un autre élément de construction (14), comprenant
· au moins un premier élément plat (1) et au moins un deuxième élément plat (2), et
· au moins un élément de serrage (3),
au moins un premier et un deuxième éléments de surface (1, 2) étant situés face à face et espacés l'un de l'autre lors de l'insertion du moyen d'assemblage, comprenant les éléments de surface (1, 2) et les éléments de serrage (3), dans l'évidement des éléments de construction en bois, la distance entre eux pouvant varier lors de la mise en tension de l'élément de serrage (3), le au moins un premier et le au moins un deuxième éléments de surface (1, 2) présentant chacun une première (1', 2') et une deuxième surface (1'", 2"'), les deuxièmes surfaces des premier et deuxième éléments de surface (1'", 2"') étant tournées l'une vers l'autre, les premières surfaces des premier et deuxième éléments de surface (1', 2') présentent des saillies (4), l'au moins un élément de serrage (3) pouvant être bloqué par complémentarité de forme entre lesdits au moins premier et deuxième éléments de surface (1, 2), et en ce que ledit au moins un élément de serrage (3) est une cale de serrage, ladite au moins une cale de serrage comprenant un moyen de liaison en forme de tige (5), de préférence un goujon d'ajustage, une tige filetée ou une broche, et au moins une cale (3', 3‴) ; ladite au moins une cale (3', 3‴) comportant un alésage ou une rainure dans lequel/laquelle s'engage le moyen de liaison en forme de tige (5) ; et en ce que ladite au moins une cale de serrage comprend au moins une première et une deuxième cale (3', 3", 3‴) ; les cales (3', 3", 3‴) présentant la même forme de base effilée et s'engageant avec l'élément de liaison en forme de tige (5) de telle sorte que les extrémités effilées des cales (3', 3'", 3ʺʺ) sont tournées les unes vers les autres ou s'éloignent les unes des autres, les coins (3', 3'", 3ʺʺ) s'appuyant par au moins une face de coin contre la deuxième surface du premier et/ou du deuxième élément de surface (1'", 2"').

2. Moyen de fixation selon la revendication 1, **caractérisé en ce que** les saillies (4) sont réparties sur l'ensemble des premières surfaces (1', 2') des éléments de surface (1, 2), la forme des saillies (4) étant choisie parmi le groupe comprenant les pointes, les dents, les rainures, les entailles, les creux, les fentes, les crochets ou les granulés.

3. Moyen de fixation selon la revendication 1, **caractérisé en ce que** les saillies (4) sont pointues.

4. Moyen de fixation selon l'une des revendications 1, 2 ou 3, **caractérisé en ce que** les éléments plats (1, 2) sont en acier, en acier inoxydable, en aluminium ou en matière plastique.

5. Moyen de fixation selon l'une des revendications 1 à 4, **caractérisé en ce que** les éléments plats (1, 2) sont des plaques, lesdites plaques présentant une épaisseur comprise entre 3 et 40 mm.

6. Moyen de fixation selon l'une des revendications 1 à 5, **caractérisé en ce que** les premier et deuxième éléments plats (1, 2) présentent une courbure convexe, les premier et deuxième éléments plats (1, 2) formant, avec l'élément de serrage (3) disposé entre eux, un dispositif de fixation en forme de tige.

7. Moyen de fixation selon l'une des revendications 1 à 6, dans lequel les deuxièmes surfaces des premier et deuxième éléments de surface (1", 2") situées en face l'une de l'autre comportent chacune au moins un évidement (9) destiné à l'élément de serrage, ledit au moins un élément de serrage (3) pouvant être bloqué dans ledit au moins un évidement (9) entre les premier et deuxième éléments de surface (1, 2).

8. Moyen de fixation selon l'une des revendications 1 à 7, **caractérisé par** une plaque de tête (10), la plaque de tête (10) pouvant être reliée aux premier et deuxième éléments de surface (1, 2).

9. Moyen de fixation selon l'une des revendications 1 à 8, **caractérisé en ce que** la distance entre les plaques (1, 2) est comprise entre 4 mm et 80 mm.

10. Système comprenant un moyen de fixation selon l'une des revendications 1 à 9 et deux éléments de construction en bois (15, 15'), les éléments de construction en bois (15, 15') comportent des évidements (16) adjacents les uns aux autres,
**caractérisé en ce que** ledit au moins un premier et ledit au moins un deuxième éléments de surface (1, 2) sont fixés de manière opposée dans les évidements adjacents des éléments de construction en bois (16), les premières surfaces des éléments de surface (1', 2') s'appuient contre les éléments de construction en bois (15, 15'), les saillies (4) situées sur la première surface (1', 2') étant enfoncées dans les éléments de construction en bois (15, 15'), les éléments de construction en bois (15, 15') étant assemblés par complémentarité de forme et par adhérence à l'aide du moyen d'assemblage.

11. Système comprenant un moyen de liaison selon la revendication 10, un élément de construction en bois (15) présentant un évidement et un élément de construction (14), **caractérisé en ce que** les premier et deuxième éléments de surface (1, 2) sont fixés de manière opposée dans l'évidement de l'élément de construction en bois (16), les premières surfaces des éléments de surface (1', 2') étant en appui contre l'élément de construction en bois (15), les saillies (4) situées sur la première surface (1', 2') sont enfoncées dans l'élément de construction en bois (15), la plaque de tête (10) étant fixée à l'élément de construction (14), l'élément de construction en bois (15) et l'élément de construction (14) étant assemblés par complémentarité de forme et par adhérence à l'aide du moyen d'assemblage.

12. Procédé d'assemblage d'au moins deux éléments de construction en bois (15, 15') à l'aide d'un moyen d'assemblage selon l'une des revendications 1 à 9, les éléments de construction en bois étant disposés côte à côte et présentant un évidement traversant (16), **caractérisé par** les étapes suivantes
· insertion du moyen de liaison, comprenant les éléments de surface (1, 2) et les éléments de serrage (3), dans l'évidement des éléments de construction en bois (16), la première surface (1', 2') des éléments de surface (1, 2) étant orientée respectivement vers les éléments de construction en bois (15, 15'),
· serrage de l'élément de serrage (3) jusqu'à ce que les éléments de surface (1, 2) soient assemblés aux éléments de construction en bois (15) par adhérence et par interférence,
les saillies (4) étant enfoncées de plus en plus profondément dans l'élément de construction en bois (15) pendant la mise en tension dudit au moins un élément de serrage (3) et s'enclenchant finalement, ledit au moins un élément de serrage (3) étant précontraint après l'enclenchement de telle sorte que les éléments de surface (1, 2) soient en permanence soumis à une pression excessive.

13. Procédé d'assemblage d'un élément de construction en bois (15) présentant un évidement (16) avec un autre élément de construction (14) à l'aide d'un moyen d'assemblage selon la revendication 1, comportant une plaque de tête (10) fixée aux éléments de surface (1, 2), **caractérisé par** les étapes suivantes
· insertion du moyen d'assemblage, comprenant les éléments de surface (1, 2) et les éléments de serrage (3), dans l'évidement des éléments de construction en bois (16), la première surface (1', 2') des éléments de surface (1, 2) étant orientée respectivement en direction des éléments de construction en bois (15, 15'),
· serrage de l'élément de serrage (3) jusqu'à ce que les éléments de surface (1, 2) soient assemblés aux éléments de construction en bois (15) par adhérence et par friction,
· vissage de la plaque de tête (10) sur l'élément de construction (14).
